# EUROPEAN PATENT APPLICATION

(11) **EP 1 276 083 A1**
(43) Date of publication of application: **15.01.2003**
(21) Application number: 02077801.5
(22) Date of filing: 10.07.2002
(51) Int. Cl.: G07F 19/00

(54) **Method and system for placing and handling an order via a data network, for example the Internet**

(30) Priority: 11.07.2001 NL 1018514
(71) Applicant: Intellect Investments B.V., 4906 CN Oosterhout (NL)
(72) Inventor: Haarman, Paulinus Cornelis Antonius Johannes, 4909 AE Oosteind (NL); Haarman, Franciscus, C.J.A., 4909 AE Oosteind (NL)
(74) Representative: Valkonet, Rutger

(57) **Abstract**

A method for placing and handling an order via a data network, such as the Internet, inter alia comprising the steps of
A) the placing of an order by a buying party,
B) the delivery of said order by a selling party,
C) the meeting of the financial obligation arising from the order placed by the buying party by said buying party prior to or after the delivery. The object of the invention is to provide a method for placing and handling an order via the Internet, which is not only customer-friendly towards the buying party, but which also gives the selling party due assurance and which, above all, is less susceptible to fraud than the method of payment as described above. In order to accomplish that objective, the method according to the invention is further characterized in that
D) step A consists of the taking of the order of the buying party via the data network by or on behalf of the selling party through registration of data relating to said order for a product or service, of identification data of the buying party and of a request for payment to the buying party,
E) the identity and the creditworthiness of the buying party are established by an intermediary on the basis of the available data,
F) step B is carried out if the buying party is known in the payment system and still has sufficient credit,
G) after step B has been carried out, the buying party fulfils its financial obligation towards the intermediary in respect of that which has been delivered in accordance with step B.

## Description

The invention relates to a method for placing and handling an order via a data network, such as the Internet, inter alia comprising the steps of
A) the placing of an order by a buying party,
B) the delivery of said order by a selling party,
C) the meeting of the financial obligation arising from the order placed by the buying party by said buying party prior to or after the delivery.
   The invention also relates to a system for placing and handling an order in accordance with the method according to the invention via a data network, such as the Internet, in which a buying party as well as a selling party are included in the data network by means of control computers and telecommunication links.
   The above scheme of steps is a fairly general representation of the structure of a delivery agreement concluded between a buying party and a selling or delivering party. The selling and buying of products and services via the so-called Internet, which is becoming increasingly popular, is different from the system of trading that has been used so far in that the selling party and the buying party do not physically meet. The number of providers of products and services on the Internet increases by the day, and the same can be said of the number of consumers who wish to effect transactions directly with said provider over the Internet. Internet orders, however, which are generally effected from the buying party's living room, are characterized by the absence of a physical meeting between the buyer and the seller, which meeting provides a certain degree of assurance with regard to the financial obligation being met, and consequently it is still the preferred method.
   With regard to the placing of orders over the Internet, several methods of payment are possible, which methods all have a number of drawbacks for the buying party as well as for the selling party.
   In particular the system of "buying on account" over the Internet is hardly finding acceptance, because the selling parties consider the risk of non-payment of this method of payment too great in view of the anonymity of the buying party.
   Although payment by means of a so-called credit card via the Internet is one of the most popular methods of payments, this form of payment is still quite susceptible to fraud, the more so because the buying party is afraid of improper use of its credit card data if said data are sent over the Internet. Furthermore, this method of payment is characterized by relatively high costs for the selling party, whilst in addition by no means all buyers have such a credit card, the more so because many people do not even qualify for such a credit card.
   Another method of payment via the Internet is the so-called "cash on delivery" method. The drawback of this method of payment is that an intermediary, in this case the transporters, must carry out the eventual financial transaction, which is time-consuming and not entirely free from errors. Furthermore, the transporters run quite a few risks on the street now that they have money in their possession. In addition, the buying party is obliged to have money in the house, and above all, this method of payment leads to a large number of return shipments in situations in which the buying party is not willing or not able to pay upon delivery.
   Another method of payment is "payment in advance by the buying party". This method of payment can be considered to be the opposite of "buying on account", and consequently it is regarded as highly customer-unfriendly, the more so because the client does not wish to pay in advance when dealing with selling parties that are unknown to him. Whereas in the case of "buying on account" the selling party is afraid of not being paid for its delivery, in the case of payment in advance the buying party is afraid of paying for an order that it will never receive.
   Another form of payment is characterized by the financing thereof. This form of payment is not only susceptible to fraud, but in many cases it does not fit in well with the image of the companies that wish to make use of this form of payment.
   Briefly put, the above methods of payment between two or more parties being in communication with each other by means of computers in a data network, via telecommunication links, are characterized by an increased risk of fraud, since the existing data networks are technically not adapted yet for carrying out the financial transactions in a manner which is free from fraud. In addition to that, neither party can be certain that the other party will meet its obligations.
   The object of the invention is to provide a method for placing and handling an order via the Internet, which is not only customer-friendly towards the buying party, but which also gives the selling party due assurance and which, above all, is less susceptible to fraud than the method of payment as described above. More in particular, it is an object of the method and the system according to the invention to provide an alternative as regards the effecting of financial transactions via the existing data networks, such as the Internet, wherein computers can communicate via telecommunication links in such a technical manner that the possibility of fraud during the financial transaction is practically if not altogether ruled out.
   It is desirable in this connection that the buying party will actually have its order delivered, whilst the selling party will actually be paid for its product or service. To that end, the method according to the invention is further characterized in that
D) step A consists of the taking of the order of the buying party via the data network by or on behalf of the selling party through registration of data relating to said order for a product or service, of identification data of the buying party and of a request for payment to the buying party,
E) the identity and the creditworthiness of the buying party are established by an intermediary on the basis of the available data,
F) step B is carried out if the buying party is known in the payment system and still has sufficient credit,
G) after step B has been carried out, the buying party will fulfil its financial obligation towards the intermediary in respect of that which has been delivered in accordance with step B.

In a further special embodiment, the method can be characterized in that, once step F has been carried out, the intermediary instructs or permits the selling party to carry out step B, wherein the intermediary meets the financial obligation entered into by the buying party as regards that which has been delivered in accordance with step B towards the selling party prior to or after step B.

The system is suitable for placing and handling an order via a data network, such as the Internet, in accordance with the method according to the invention, in which a buying party as well as a selling party are included in the data network by means of control computers and telecommunication links, and in which the buying party places an order and the selling party delivers the order, and in which the buying party meets its financial obligation arising from the order it has placed prior to or after delivery, wherein the system is characterized by at least one control computer comprising data storage means having at least one control system stored thereon and at least one electronic database containing information with regard to the available orders to be placed connected thereto, as well as data processing means arranged for receiving and registering, via the data network, data signals created and transmitted by said at least one control computer of the buying party, which data signals contain data about an order for a product or service, identification data relating to the buying party and a request for payment to the buying party, wherein the processing means are arranged for establishing the identity and the creditworthiness of the buying party on the basis of available data stored in the electronic database and, if the processing means have established that the buying party is known in the payment system and still has sufficient credit, generating instructions to the selling party to deliver the order and transmitting said instructions via the data network.

Although it is recognised that the present data networks and in particular the Internet are not adequately secured from a technical point of view, in particular as regards the sending of sensitive information via communication links between computers, so that fraud remains a possibility, the involvement of an intermediary, which may be the administrator or the representative of the payment system according to the invention and which handles the financial part of the transaction between the buying party and the selling party, leads to a method of effecting transactions which constitutes a low threshold for both parties. The buying party does not need to pay until order has been delivered, whilst the selling party is no longer confronted with anonymous buyers that fail to meet their obligations.

According to the invention, the method is further characterized in that step G can be carried out by the buying party within a previously agreed period after the delivery in accordance with step B. If the buying party does not effect payment to the intermediary within the previously agreed period, the buying party's financial obligation towards the intermediary will be converted into a system of payment by instalments, with interest possibly being due.

Whereas in the foregoing the identity and the creditworthiness of the buying party may already be known to the intermediary, which may be a bank, a finance company and the like, and the payment agreement has already been drawn up between the buying party and the intermediary, the system according to the invention comprises the contacting of the buying party by the intermediary if the buying party is not known to the intermediary and/or not registered in the payment system, so as to establish the buying party's identity and creditworthiness. According to the invention, a payment agreement is drawn up between the buying party and the intermediary if the buying party is fully unknown to the intermediary and/or if there is no payment agreement between the buying party and the intermediary yet. A visit may be paid to the buying party for the purpose of having the agreement signed, during which visit, preferably to the delivery address for the delivering party, at least part of the buying party's identification data can be verified against relevant documents, as well as any means of communication for the communication between the buying party and the intermediary, for example e-mail, telephone, fax, SMS or WAP.

The above actions not only serve to obtain certainty as regards the identity, the delivery address, the creditworthiness and the means of communication used by the buyer, but in addition a personal contact as regards the transaction or the order is established, which is considered to be very agreeable, especially to the buying party. Moreover, a lot of pseudo-orders can be prevented in this way, as in accordance with the invention only buyers whose identity and in particular whose address data are known (which is important in connection with the delivery of the order) can place orders via the Internet, whilst in addition an insight into and certainty as regards the creditworthiness of the buying party in question is gained in this way, so that both the selling party and the intermediary will have greater certainty as regards the financial obligations of the buying party in question being met.

Once a payment agreement has been drawn up between the buying party and the intermediary, the buying party can place an order with any selling party that uses the payment system according to the invention, wherein the payment system identifies the buying party as such and directly gives the selling party permission to deliver, providing that the buying party still has sufficient credit.

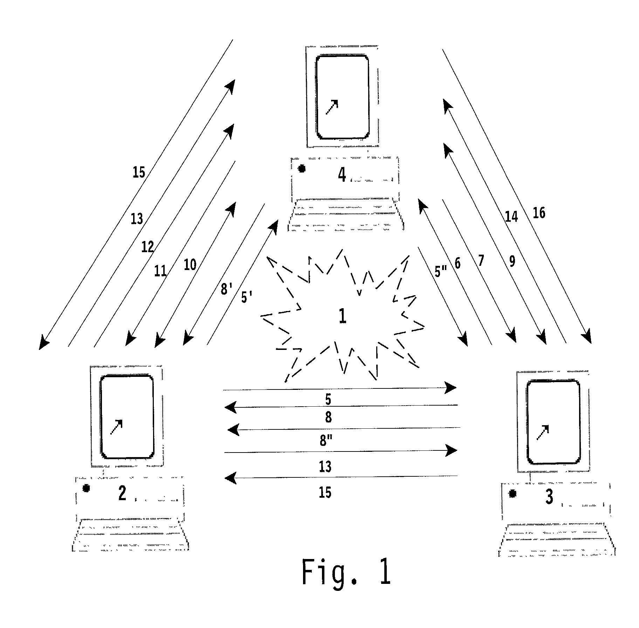

The method and the system according to the invention for placing and handling an order via the data network, such as the Internet, will now be schematically illustrated with reference to Figure 1, in which the buying party 2, the selling party 3 and intermediary 4, which may be a bank or a financing company, are in contact with each other or communicate with each other via a data network, for example the Internet 1, by means of control computers 2, 3 and 4 and suitable data communication links.

The buying party 2 wishes to place an order with the selling party 3 for a particular product or service, and in order to confirm that order, the buying portly fills in a form, in a manner which is known per se, which is presented on the display screen of the control computer of the buying party 2 from the website that is maintained by the selling party 3. To that end, the buying party fills in the form (schematically indicated by the arrow 5 in the figure), providing a number of data relating to the buyer's identity (name, address, telephone number, e-mail address etc.) on the one hand and to the order, a product or a service, on the other hand. The order may be placed through an intermediary (indicated by the arrow 5'), which intermediary may be a bank or a financing company or an entirely different intermediary, for example the administrator or the representative of the payment system according to the invention. After the receipt of said order data 5' by the intermediary 4, the latter can forward said order data to the selling party 3 for verification (indicated by the arrow 5'').

In either situation, the buying party must also indicate that it wishes to use the method of payment according to the invention. To that end, the selling party 3 will instruct the intermediary 4 (arrow 6) as regards the available information about the buying party 2, or the intermediary 4 will base itself on the information that the buying party 2 has supplied to the intermediary via the arrow 5', on the basis of which data the intermediary 4 will establish the identity and the creditworthiness of the buying party 2. If it appears that the buying party 2 is known to be a creditworthy party and, in addition, the buying party's identity is indisputable, the selling party 3 will in accordance with the method of payment according to the invention be instructed by the intermediary 4 (indicated by the arrow 7) to effect delivery of the order placed by the buying party 2 (indicated by the arrow 5) at the address that is known to the intermediary 4. The delivery as effected to the buying party 2 by the selling party 3 is indicated by the arrow 8 in the figure. Prior to the actual delivery by the selling party 3, either the intermediary 4 (arrow 8') or the selling party 3 (arrow 8'') may acknowledge receipt of the order 5 to the buying party 2. In addition to that, the buying party 2 may confirm its order to the intermediary 4 or to the selling party 3. Furthermore, the intermediary 4 or the selling party 3 will send the buying party 2 an invoice (15), in which a time period is stated within which the buying party 2 must effect payment in respect of the delivery 8 to the intermediary 4.

A characteristic feature of the method of payment according to the invention is the fact that the buying party does not meet its financial obligation directly to the selling party 3 but, in a delayed form, to the intermediate 4, i.e. only after delivery by the selling party 3. On the other hand, the selling party 3 effects delivery to the buying party 2 independently of the fact whether payment is actually effected by the buying party 2. The fact of the matter is that the selling party 3 and the intermediary 4 have agreed between themselves (indicated by arrow 9) that the intermediary 4 will effect payment to the selling party 3 in respect of the financial obligation entered into by the buying party 2 before, during or after the time of delivery 8 by the selling party 3 (indicated by the arrow 16). In fact, what it all boils down to is that the intermediary 4 has a claim on the buying party 2 after delivery of the product or the service by the selling party 3, since the intermediary 4 has met all the financial obligations arising from the transaction towards the selling party 3.

In the system as shown, the buying party, the selling party as well as the intermediary are included in the data network by means of control computers (2, 3, 4) and suitable telecommunication links. At least one control computer, preferably the selling party's control computer 3, comprises data storage means (not shown), on which a control system and an electronic database connected thereto are stored. The database contains information with regard to the available orders to be carried out. Furthermore, the control computer 3 comprises data processing means (not shown), which are arranged for receiving and registering, via the data network, data signals created and transmitted by said at least one control computer 2 of the buying party, which data signals contain data about an order for a product or service, identification data relating to the buying party and a request for payment to the buying party 2.

Furthermore, the processing means are arranged for establishing the identity and the creditworthiness of the buying party on the basis of the available data that are stored in the electronic database. Said establishing can be done by the processing means of the selling party's control computer 3 or by processing means (not shown) of the control computer 4 of an intermediary.

Once the processing means of the control computer 3 or 4 have established that the buying party is known in the payment system and still has sufficient credit, the processing means will generate instructions to the selling party to effect delivery of the order and transmit said instructions via the data network.

After delivery has been effected, the buying party 2 will meet its financial obligation towards the intermediary. This financial transaction can take place via the data network, for example.

The processing means 3 or 4 may be arranged for generating an acknowledgement of receipt of the order and sending it to the buying party 2 via a means of communication, for example e-mail, telephone, fax, SMS or WAP, before delivery to the buying party 2 is made.

On the other hand, at least one control computer 3 or 4 is arranged for receiving a confirmation or reconfirmation of the order by the buying party sent to the intermediary and/or to the selling party via a means of communication, for example e-mail, telephone, fax, SMS or WAP.

It will be understood that this form of placing and handling an order over the Internet constitutes a low threshold both for the buying party 2 and for the selling party 3. After all, the buying party 2 only needs to pay after delivery has been effected, whilst the selling party 3, on account of its agreement 9 with the intermediary 4, is assured that the financial obligations towards itself will be met.

For the record, it is noted that the term delivery does not mean that delivery of the order will take place at the buying party's address in every case. It is also possible for the buying party 2 to pick up the order at the address of the selling party or its representative (for example the collection counter or parcel service) upon submission of valid identity certificates or proof of identity of the buying party 2.

The buying party 2 now has the possibility to meet its financial obligation towards the intermediary 4 (indicated by the arrow 12) within a predetermined period after the date of delivery by the selling party 3. The selling party 3 can indicate to the intermediary 4 that and/or when the delivery 8 has taken place (arrow 14). If the buying party 2 fails to effect payment within that period, its financial obligation towards the intermediary 4 is according to the invention converted into a scheme of payment by instalments, with interest preferably, albeit not necessarily, being due. The risk of fraud is very small for the intermediary 4 with this system according to the invention, because the identity and the creditworthiness of the buying party 2 are known to the intermediary 4 and have been thoroughly checked in advance already. In addition, there is great certainty that the buying party 2 can meet its obligation to pay, either in full within the specified period or, if the buying party should wish so, by instalments at a later point in time.

If it should appear from the order 5, however, that the buying party 2 is new and consequently wishes to register with this payment system, a different procedure will be followed. The intermediary 4 will not instruct the selling party 3 (via the arrow 7) to effect delivery 8 in that case, but contact the buying party 2 for additional information with regard to the identity, the creditworthiness, the delivery address and, possibly, the means of communication, and conclude a payment agreement 10 with the buying party. All the data with regard to the identity and the creditworthiness as supplied by the buying party 2 at an earlier stage will be verified thereby, preferably by visiting the buying party 2 at the latter's home address. On that occasion, the payment agreement will have to be signed by the buying party 2, whilst furthermore the identity and especially the address of the buying party will be verified against all kinds of identification papers, such as passports, bank statements etc. Verification of the home address is important because the selling party 3 will have to effect delivery at this address. Furthermore, a means of communication or communication address, for example e-mail, telephone, fax, SMS or WAP, will be provided in view of possible confirmation and reconfirmation of the order.

This visit to the buying party's home address (arrow 11) helps to prevent so-called pseudo-purchases.

Once the new buying party 2 has been registered in the payment system, the intermediary 4 will instruct the selling party 3 via the arrow 7 to actually deliver the order 5 placed by the buying party 2 (arrow 8).

In particular the visit to the buying party's home address gives this payment system a personal touch, which is found to be pleasant, especially by the buying party 2, and which, in addition, constitutes a first step towards preventing fraud.

## Claims

1. A method for placing and handling an order via a data network, such as the Internet, inter alia comprising the steps of
A) the placing of an order by a buying party,
B) the delivery of said order by a selling party,
C) the meeting of the financial obligation arising from the order placed by the buying party by said buying party prior to or after the delivery, **further characterized in that**
D) step A consists of the taking of the order of the buying party via the data network by or on behalf of the selling party through registration of data relating to said order for a product or service, of identification data of the buying party and of a request for payment to the buying party,
E) the identity and the creditworthiness of the buying party are established by an intermediary on the basis of the available data,
F) step B is carried out if the buying party is known in the payment system and still has sufficient credit,
G) after step B has been carried out, the buying party fulfils its financial obligation towards the intermediary in respect of that which has been delivered in accordance with step B.

2. A method according to claim 1, **characterized in that,** once step F has been carried out, the intermediary gives the selling party permission to carry out step B.

3. A method according to claim 1 or 2, **characterized in that** the intermediary meets the financial obligation entered into by the buying party as regards that which has been delivered in accordance with step B towards the selling party prior to or after step B.

4. A method according to any one or more of the preceding claims, **characterized in that** step G can be carried out by the buying party within a previously agreed period after the delivery in accordance with step B.

5. A method according to claim 4, **characterized in that** if step G is not carried out within the previously agreed period, the financial obligation is converted into a system of payment by instalments, with interest possibly being due.

6. A method according to any one or more of the preceding claims, **characterized in that** the intermediary contacts the buying party if the buying party is not known to the intermediary and/or not registered in the payment system, so as to establish the buying party's identity and creditworthiness.

7. A method according to claim 6, **characterized in that** the scope of the buying party's credit is determined at an amount equal to or lower than the estimated total amount of credit that applies at that point in time.

8. A method according to claim 6 or 7, **characterized in that** the buying party, prior to making use of the payment system, indicates the desired credit amount for this order and/or any next orders.

9. A method according to any one or more of the preceding claims, **characterized in that** a payment agreement is drawn up between the buying party and the intermediary if the buying party is not known to the intermediary and/or not registered in the payment system.

10. A method according to claim 9, **characterized in that** a maximum credit amount is stated in the payment agreement.

11. A method according to claim 9 or 10, **characterized in that** a visit is paid to the buying party for the purpose of having the agreement signed.

12. A method according to claim 11, **characterized in that** at least part of the buying party's identification data and personal details are verified against relevant documents.

13. A method according to any one or more of the preceding claims, **characterized in that**, prior to step B, the buying party receives an acknowledgement of its order via a means of communication, for example e-mail, telephone, fax, SMS or WAP.

14. A method according to claim 13, **characterized in that** the buying party sends a confirmation or reconfirmation of the order to the intermediary and/or to the selling party via a means of communication, for example e-mail, telephone, fax, SMS or WAP.

15. A method according to claim 13 or 14, **characterized in that** the form of communication is laid down in an agreement.

16. A method according to any one or more of the preceding claims, **characterized in that** the buying party is offered a possibility of paying the intermediary in advance if the buying party is not creditworthy or not sufficiently so.

17. A method according to any one or more of the preceding claims, **characterized in that** delivery in accordance with step B only takes place at the address as stated and/or visited and mentioned in an agreement.

18. A method according to any one or more of the preceding claims, **characterized in that** delivery in accordance to step B only takes place to the buying party properly identifying itself as such, so that delivery may take place at another address which is not known in the payment system.

19. A method according to any one or more of the preceding claims, **characterized in that** the data relating to the buying party's identity and/or credit are stored on a storage medium, for example the computer, a database or a file.

20. A method according to any one or more of the preceding claims, **characterized in that** if the buying party places an order with another selling party, which other selling party uses the same payment system, the buying party will be recognised as such by the payment system.

21. A method according to any one or more of the preceding claims, **characterized in that** the selling party and/or its transporter and/or its order handler informs the intermediary that the order or part of the order has been delivered and/or been carried out and/or been collected.

22. A system suitable for placing and handling an order via a data network, such as the Internet, according to any one or more of the preceding method claims, in which a buying party as well as a selling party are included in the data network by means of control computers and telecommunication links, in which
the buying party places an order, and
the selling party delivers the order, and
in which the buying party meets its financial obligation arising from the order it has placed prior to or after delivery, wherein the system is
**characterized by**
at least one control computer comprising data storage means having at least one control system stored thereon and at least one electronic database containing information with regard to the available orders to be placed connected thereto, as well as data processing means arranged for receiving and registering, via the data network, data signals created and transmitted by said at least one control computer of the buying party, which data signals contain data about an order for a product or service, identification data relating to the buying party and a request for payment to the buying party,
wherein the processing means are arranged for establishing the identity and the creditworthiness of the buying party on the basis of available data stored in the electronic database and, if the processing means have established that the buying party is known in the payment system and still has sufficient credit, generating instructions to the selling party to deliver the order and transmitting said instructions via the data network.

23. A system according to claim 22, **characterized in that** the processing means are arranged for generating an acknowledgement of receipt of the order and sending it to the buying party via a means of communication, for example e-mail, telephone, fax, SMS or WAP, prior to the delivery of the order to the buying party.

24. A system according to claim 23, **characterized in that** said at least one control computer is arranged for receiving a confirmation or reconfirmation of the order by the buying party sent to the intermediary and/or to the selling party via a means of communication, for example e-mail, telephone, fax, SMS or WAP.
